# EUROPÄISCHE PATENTSCHRIFT

(11) **EP 0 416 201 B1**
(45) Veröffentlichungstag und Bekanntmachung des Hinweises auf die Patenterteilung: **07.07.1993**
(21) Anmeldenummer: 90107197.7
(22) Anmeldetag: 14.04.1990
(51) Int. Cl.: B65G 21/00, B65G 21/08

(54) **Vorrichtung zur Sicherung von Einzugsspalten an Bandförderern**
Device for securing entry gaps in band conveyors
Dispositif protecteur pour espaces de rentrage sur des transporteurs de bande

(30) Priorität: 08.09.1989 DE 3929914
(43) Veröffentlichungstag der Anmeldung: 13.03.1991
(73) Patentinhaber: Geppert, Helmut, Dipl.-Ing., 52382 Niederzier-Krauthausen (DE)
(72) Erfinder: Geppert, Helmut, Dipl.-Ing., 52382 Niederzier-Krauthausen (DE)
(74) Vertreter: Liermann, Manfred

(56) Entgegenhaltungen:
- EP-A- 0 156 207
- EP-A- 0 293 516
- DE-A- 2 105 755
- DE-U- 8 438 357

## Beschreibung

Die Erfindung betrifft eine Vorrichtung zur Sicherung von fördermittel- ein- und/oder -auslaufseitigen Einzugsspalten zwischen einer Fördermitteloberfläche eines Fördermittels eines Bandförderers und einer Walzenoberfläche mindestens einer zugeordneten Walze, wobei jede Walze in an einem Förderbandrahmen befestigten Tragstücken drehbar gelagert ist und wobei mindestens den Tragstücken der Aufgabe- und der Abgabewalze ein Abdeckglied zugeordnet ist, das die zugeordnete Walze auf deren nicht das Fördermittel führenden Seite zwischen einlaufendem und ablaufendem Trum desselben mit lediglich einen Bewegungs- oder Einstellspielraum bildenden Abstand mindestens teilweise umgibt.

Vorrichtungen der oben beschriebenen Art sind bereits bekannt geworden durch die EP-A-0 293 516 oder EP-A-0 156 207 aber auch durch DE-U-84 38 357. Solche bekannten Einrichtungen, die verschiedene Ausführungsformen annehmen können, haben sich durchaus bewährt. Sie sind jedoch jeweils als Teilabdeckung einem bestimmten Tragstück zugeordnet und mit diesem einstückig ausgebildet oder an diesem lösbar befestigt oder direkt am Förderbandrahmen befestigt. Das zweite freie Ende solcher Abdeckglieder kann bei einer lösbaren Befestigung am Tragstück oder am Förderbandrahmen schwingen, was zu Verletzungen des Fördermittels führen kann. Um solche Schwingungen zu vermeiden, muß ein solches Abdeckglied relativ kurz gehalten werden oder sehr aufwendig lösbar befestigt werden. Wenn es kurz gehalten wird, bleibt im Mittelbereich ein gefährdeter Bereich frei. Wird es aufwendig lösbar befestigt, so ist es teuer und schwer. Gleiches gilt für die einstückige Ausführung, bei der das Abdeckglied jeweils mit dem zugeordneten Tragstück einstückig ausgebildet ist.

Die hier genannten Bandförderer weisen sehr häufig zusätzlich sogen. Andrückwalzen auf, die z.B. von unten gegen die Außenseite des Untertrums eines Fördermittels gedrückt werden, wodurch das Fördermittel auf eine gwünschte Spannung eingestellt werden kann. Auch hierbesteht bspws. in Laufrichtung des Fördermittels ein Einzugsspalt, so daß hier Gefahr besteht, daß unbeabsichtigt Finger, Werkzeuge oder Kleidungsstücke oder ähnliche Dinge zwischen Fördermitteloberfläche und Andrückwalzenoberfläche eingezogen und gequetscht werden. Neben der Verletzungsgefahr besteht hierdurch außerdem die Gefahr der Zerstörung der eingezogenen Teile sowie des Fördermittels und ggfls. auch der Andrückwalze. Um diese Gefahr zu beseitigen ist bereits vorgesehen, vor den gefährlichen Einzugsspalten jeweils beidseitig dünne Rundstäbe parallel zur Walze in entsprechende Tragstücke einzuhängen. Dies ist eine sehr einfache und kostengünstige Lösung, kann jedoch nicht vollständig befriedigen, weil diese Rundstäbe ihrerseits nun wieder einen Einzugsspalt zwischen Rundstaboberfläche und Fördermitteloberfläche bilden, und die Einzugsgefahr wird bei dieser Konstruktion noch dadurch vergrößert, daß die Rundstäbe durch die einfach eingehängte Anordnung selbst auch in der Lage sind sich zu drehen, so daß weiterhin die Gefahr des ungewollten Einzugs von Gegenständen besteht.

Der Erfindung liegt somit die Aufgabe zugrunde, eine Vorrichtung der eingangs beschriebenen Art vorzuschlagen, die eine funktionssichere Abdeckung aufweist, die sehr einfach aufgebaut und einfach und billig in der Fertigung und Montage ist.

Diese Aufgabe ist ausgehend von einer Vorrichtung der eingangs beschriebenen Art erfindungsgamäß dadurch gelöst, daß das Abdeckglied als Profilstab mit nicht kreisrundem Querschnitt gestaltet ist, der mit seinen Endenlose in entsprechend geformte Stecker oder Öffnungen oder Schlitze der Tragstücke bzw. der Tragelemente eingehängt oder eingesteckt ist. Durch die Möglichkeit des einfachen Einhängens oder Einsteckens wird eine einfache Montage erreicht und Maßungenauigkeiten und Überbestimmungen bezügl. des Abstandes der beiden sich gegenüberliegenden Werkstücke zueinander vermieden. Gleichzeitig können die Tragstücke selbst einfacher gestaltet werden als bisher. Da die Abdeckglieder nicht etwa einen kreizylindrischen Querschnitt aufweisen, sondern einen hiervon abweichenden Querschnitt, sind sie in ihrer Lage durch den Steckvorgang oder Einhängvorgang auch eindeutig definiert und können ihre Lage nicht ändern.

Hierdurch ergibt sich eine weitere Anwendungsmöglichkeit als Vorrichtung zur Sicherung von fördermittelein- und/oder -auslaufseitigen Einzugsspalten zwischen einer Fördermitteloberfläche eines Fördermittels eines Bandförderers und einer Walzenoberfläche mindestens einer zugeordneten Walze, die als Andrückwalze für das Untertrum des Fördermittels je in an einem Förderbandrahmen befestigten Tragstücken gehalten und in diesem oder auf einer Drehachse drehbar gelagert ist. Solche Andrückwalzen sind an den gleichen Bandförderern vorgesehen. Es wird nun auch hier der Grundgedanke übernommen, daß die Abdeckglieder als Profilstäbe mit nicht kreisrundem Querschnitt gestaltet sind, die mit ihren Enden in entsprechend geformte Öffnungen oder Schlitze der Tragelemente eingehängt oder eingesteckt sind. Hierdurch wird einerseits verhindert, daß sich die Abdeckglieder ihrerseits um eine Rotationsachse drehen können und es wird gleichzeitig die einfache Montage durch Einstecken oder Einhängen beibehalten. Auch der einfache Aufbau des beschriebenen Abdeckgliedes wird gegenüber dem Stand der Technik beibehalten oder gar noch vereinfacht. Da die Querschnittsform der erfindungsgemäßen Abdeckglieder vom kreisrunden Querschnitt abweicht und da sich die erfindungsgemäßen Abdeckglieder nun in ihrer Aufhängung nicht mehr um eine Rotationsachse prallel zur Walzenachse drehen können, ist bei Beibehaltung oder gar Verbesserung der bekannten Vorteile auch der gefährliche Einzugsspalt zwischen Fördermittelunterseite und Oberfläche der Andrückwalze abgedeckt. Gleichzeitig ist hierdurch vermieden worden, daß eine neue Einzugsspalte zwischen Abdeckglied und Fördermittelunterseite entsteht. Es ist ja einerseits die Rotationsmöglichkeit des Abdeckgliedes beseitigt und es treten andererseits keine Einzugskeilflächen zwischen der Oberfläche der verwendeten Abdeckglieder und der der Andrückwalzenoberfläche zugewandten Seite des Fördermittels auf. Kommt bspws. eine menschliche Hand unbeabsichtigt in den Gefahrenbereich, so kann es hier allenfalls zu einem Abstreifen am Profilstab kommen, aber nicht mehr zu einem Einziehen.

Tragelemente und Tragstücke können problemlos einstückig ausgebildet sein. Dies ermöglicht einen sehr einfachen Aufbau der Tragstücke.Mit der einstückigen Ausbildung kann die gesamte Breite zwischen den Tragstücken lückenlos abgedeckt werden.

Hierbei ist es natürlich besonders vorteilhaft, wenn jeder Profilstab im eingebauten Zustand mit einer Fläche oder einem Flächenbereich einerseits bis auf einen zulässigen Spalt an die zugeordnete Fördermitteloberfläche und andererseits bis an die Walzenoberfläche der zugeordneten Walze heranreicht. Auf diese Art und Weise wird zusätzlich ein gefährlicher Spalt zwischen Profilstab und Walzenoberfläche vermieden. Hierbei sollte die Unterseite des an die Walzenoberfläche heranreichenden Teils des Profilstabes wenigstens angenähert in Höhe einer parallel zur Fördermitteloberfläche verlaufenden Durchmesserlinie der Walze enden. Hierdurch wird nicht nur ein Spalt im notwendigen Umfang abgedeckt, sondern auch ein Einzugskeil verhindert.

Der Profilstab selbst kann sowohl als Vollprofil als auch als Hohlprofil oder Winkelprofil oder Flachprofil ausgebildet sein. Hierbei findet vorzugsweise ein rechteckiges, insbesondere quadratisches Vollprofil oder Hohlprofil Anwendung. Für Andrückwalzen mit besonders großem Durchmesser empfehlen sich hochkant stehende Rechteckprofile oder Flachprofile. Die verwendeten Profile brauchen nur auf Länge abgesägt und entgratet zu werden, um einsatzfertig zu sein.

Die Tragelemente mit ihren Tragstücken sind am Rahmen eines Bandförderers lageveränderlich angeordnet, um über eine entsprechende Lageveränderung der Andrückwalzen eine Beeinflussung des Fördermittels zu erreichen. Hierbei ist es dann vorteilhaft, wenn die Öffnungen oder Schlitze, die die Enden der Profilstäbe aufnehmen sollen, in ihren Abmessungen genügend groß sind, um etwas Spiel zu den Oberflächen der Enden des Profilstabes aufzuweisen. Hierdurch können nämlich die Profilstäbe bei bereits zusammengebautem Rahmen problemlos eingesteckt werden.

Es ist aber auch möglich die Tragelemente als von den Tragstücken unabhängige Bauteile auszuführen und an den Tragstücken zu befestigen. Die Tragstücke bleiben hierdurch einfach im Aufbau und es können die Tragelemente mit nach außen offenen Schlitzen versehen werden, die ein besonders einfaches Einhängen der Profilstäbe ermöglichen. Die Tragelemente weisen dann gleichzeitig die Bohrung für die Aufnahme der Achse der Andrückwalze auf. Es ist hierbei sogar möglich, auch diese Bohrung als nach oben offenen Schlitz auszubilden, so daß auch die Andrückwalze im bereits zusammengebauten Zustand des Förderbandrahmens noch von oben her eingehängt werden kann.

Das Einstecken kann jedoch auch dadurch erleichtert werden, daß der einzuhängende Profilstab aus zwei Einzelstäben besteht, von denen mindestens einer ein Kastenprofil aufweist, während der andere im inneren Hohlraum des Kastenprofils verschiebbar angeordnet ist. Dieser andere Einzelstab kann dann entweder aus Vollmaterial mit entsprechendem Querschnitt oder auch als Kastenprofil ausgebildet sein. Die beiden Einzelstäbe haben solche Abmesssungen, daß sie teleskopartig ineinandergeschoben werden können. In ineinandergeschobenem Zustand können sie dann in Einsteckposition gebracht und danach auseinandergezogen werden. Hierdurch können sie mit ihren Enden in die entsprechenden Öffnungen der Tragstücke eingesetzt werden, die natürlich in ihren Öffnungsmaßen den Querschnittsmaßen der Enden der Einzelstäbe angepaßt sind. Im auseinandergezogenen Zustand können die Einzelstäbe dann durch einen quer hindurchgeschobenen Bolzen, für den dann die enstprechenden Bohrungen vorgesehen sein müssen, gehalten werden. Es ist aber auch möglich, im Inneren des größeren Einzelstabs eine einfache Spiraldruckfeder anzuordnen, die gegen den einschiebbaren zweiten Einzelstab einerseits andrückt und andererseits sich an ihrem Ende an einer Gegenplatte des größeren Einzelstabs oder ganz einfach am Rahmen des Bandförderers abstützt Möglich ist auch am Ende dieser Druckfeder wiederum einen Bolzen vorzusehen, der durch entsprechende Querbohrungen im Kastenprofil des ersten Einzelstabs hindurchgesteckt ist. Die Druckfeder kann sich dann mit ihrem zweiten freien Ende an diesem Bolzen abstützen.

Die Erfindung soll nun anhand der Zeichnungen, die verschiedene Ausführungsbeispiele zeigen näher erläutert werden.

Es zeigen:
- Figur 1: Explosionszeichnung eines Bandförderers nach dem Stand der Technik.
- Figur 2: Perspektive entsprechend Ausschnitt A nach Fig. 1, jedoch in erfindungsgemäßer Ausführung.
- Figur 3: Abdeckglied in Teleskopausführung in Perspektive.
- Figur 4: Perspektive entsprechend Ausschnitt A nach Fig. 1, jedoch in seiner alternativen erfindungsgemäßen Ausführung
- Figur 5: Schnitt II-II nach Fig. 2.
- Figur 6: Perspektivische Darstellung verschiedener Profile von Abdeckgliedern.
- Figur 7: Schematisierter Schnitt I-I nach Fig. 1, jedoch mit erfindungsgemäßen Abdeckgliedern.
- Figur 8: Schematisierter Schnitt I-I nach Fig. 1, jedoch mit erfindungsgemäßem Abdeckglied in alternativer Ausführung.
- Figur 9: Draufsicht nach Fig. 8.
- Figur 10: Schematisierte Seitenansicht eines Bandförderers.
- Figur 11: Ansicht in Richtung des Pfeils B nach Fig. 10.

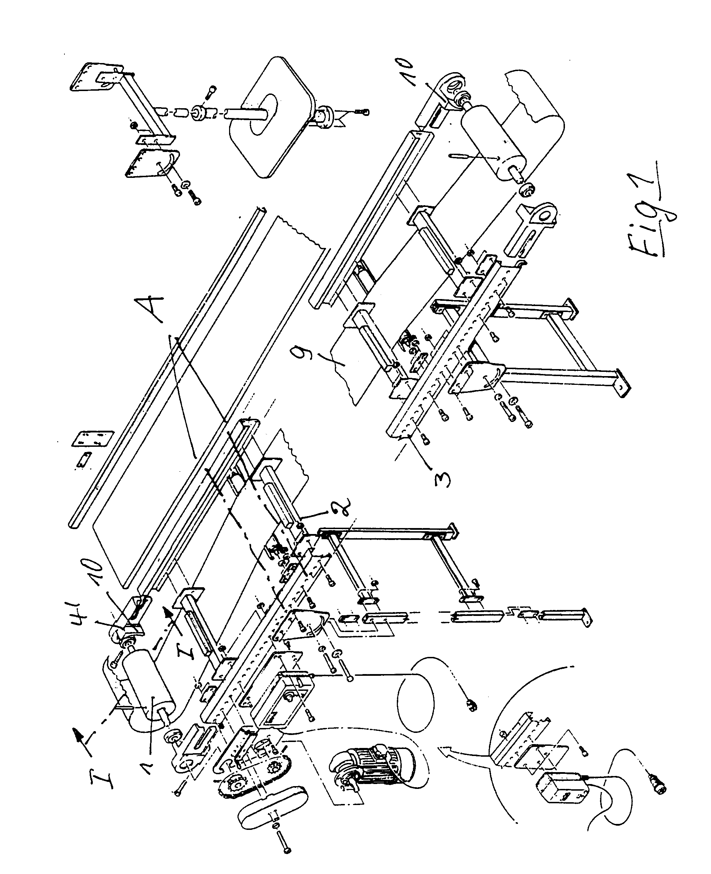

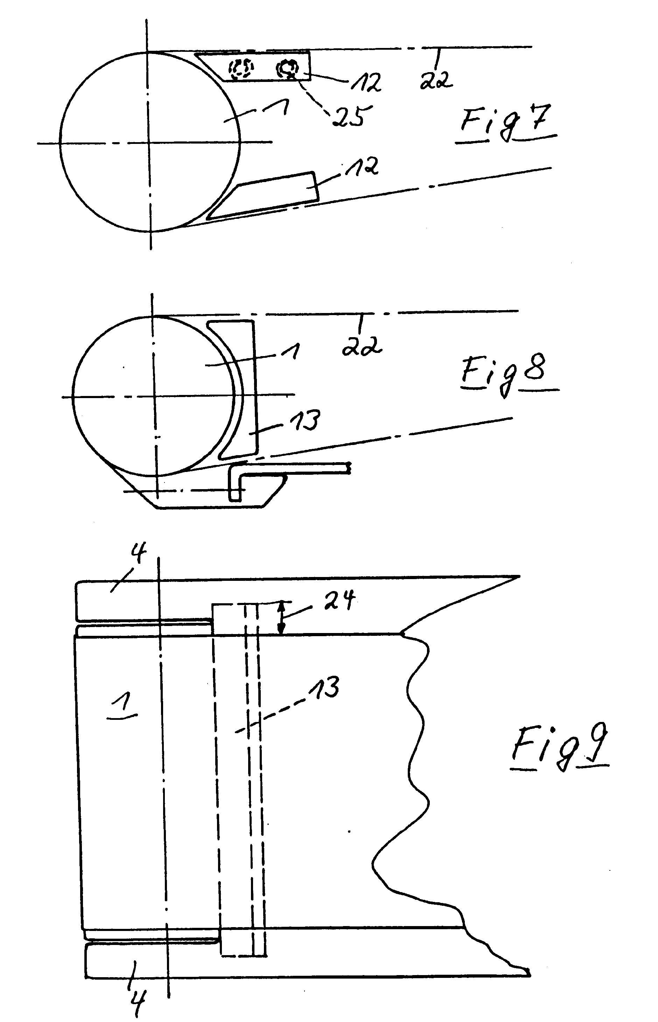

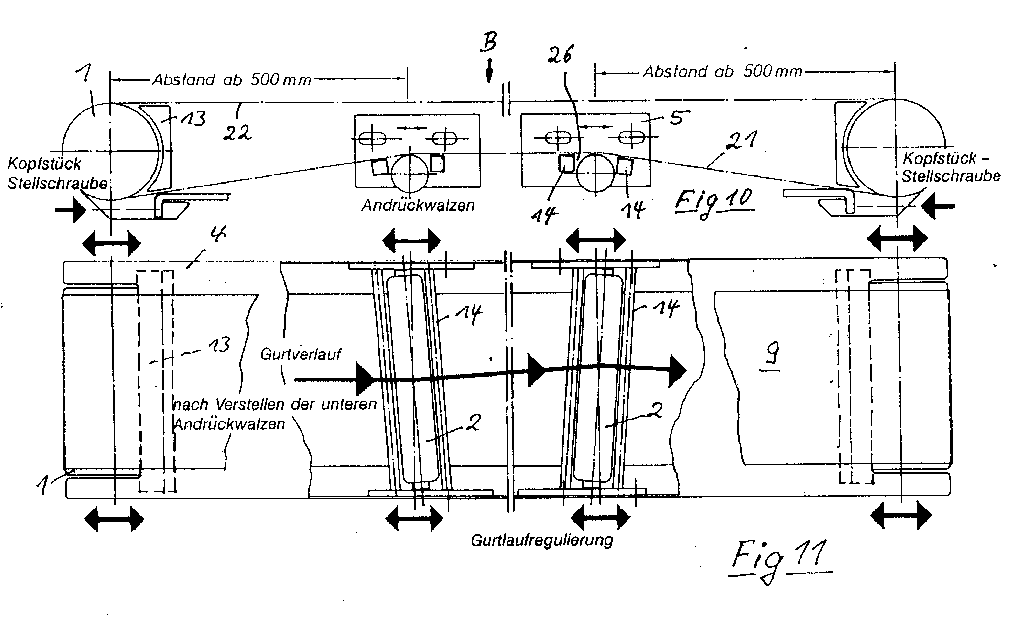

Figur 1 zeigt perspektivisch einen Bandförderer in der Bauart nach dem Stand der Technik. Solche Bandförderer sind weitverbreitet im Einsatz und haben sich gut bewährt. An ihren Enden weisen solche Bandfördervorrichtungen angetriebene und/oder antriebslose Walzen 1 auf, um die das Fördermittel, also der Fördergurt, herumgelegt ist. Hierdurch aber entsteht zwischen der der Walzenoberfläche zugewandten Seite des Gurtes und der Walzenoberfläche selbst ein Einzugsspalt, der abgedeckt werden muß. Hierzu weisen die bekannten Tragstücke 4′, in denen jeweils eine Walze 1 drehbar gelagert ist, bekannte und durchaus bewährte Abdeckglieder 10 auf, die in ihrer Gestaltung der Fig. 1 entnommen werden können. Bei der Vielzahl der Bauarten solcher Bandförderer ist es jedoch manchmal erwünscht, den gesamten Bereich über die ganze Länge einer Walze mit solchen Abdeckgliedern abzudecken, was mit der vorbekannten Bauart der Tragstücke 4 mit den angesetzten Abdeckgliedern nicht möglich ist. Um hier eine Lösung zu schaffen, sind nach der Erfindung Tragstücke 4 (Fig. 9) vorgesehen zur Halterung der Walze 1, die an entsprechender Stelle auf ihrer Innenseite Vertiefungen 24 aufweisen. In diese Vertiefungen 24 ist nun ein Profilstab als durchgehendes Abdeckglied 13 einfach eingesteckt. Dieses Abdeckglied 13 kann in seinem Querschnitt den schon bekannten Querschnitt aufweisen, wie er in Fig. 1 ersichtlich ist. Die entsprechende Querschnittsform ist in Fig. 8 deutlich zu erkennen. Hierbei ist in Fig. 8 das Abdeckglied 13 nicht im Schnitt, sondern in einer stirnseitigen Ansicht dargestellt.

Nicht immer ist die vollkommen geschlossene Ausführung nach Fig. 8 erforderlich. So zeigt Fig. 7 eine Variante, bei der der mittlere Bereich offen bleibt und eine Abdeckung nur im unmittelbaren Bereich der gefährlichen Einzugsspalte, aber über die ganze Länge der Walze, erfolgt. Dort sind einfache Abdeckglieder 12 als durchgehende Stücke vorgesehen, die wiederum in entsprechende Ausnehmungen der Tragstücke 4 eingesteckt sein können. es ist aber auch möglich, an den Tragstücken 4 Zylinderstifte oder Spannhülsen 25 vorzusehen, die in entsprechende stirnseitige Bohrungen der Abdeckglieder 12 hineinpassen, so daß die Abdeckglieder 12 auf diese Spannhülsen 25 aufgesteckt sein können.

Beide Ausführungsformen der Abdeckglieder 12 und 13 haben den zusätzlichen Vorteil, daß ihre Länge nicht sehr genau angepaßt sein muß, so daß die Länge dieser Abdeckglieder nicht bestimmend ist für die Breite des ganzen Bandförderers. Hierdurch ist es nicht erforderlich, alle übrigen die Breite des Rahmens des Bandförderers beeinflussenden Bauteile auf die Länge dieser Abdeckglieder abzustimmen.

Beide Ausführungsformen der Abdeckglieder 12 und 13 stellen eine sichere Abdeckung des jeweiligen Einzugspaltes zwischen der Fördermitteloberfläche 22 einerseits und der nicht näher bezeichneten Walzenoberfläche der Walze 1 andererseits dar.

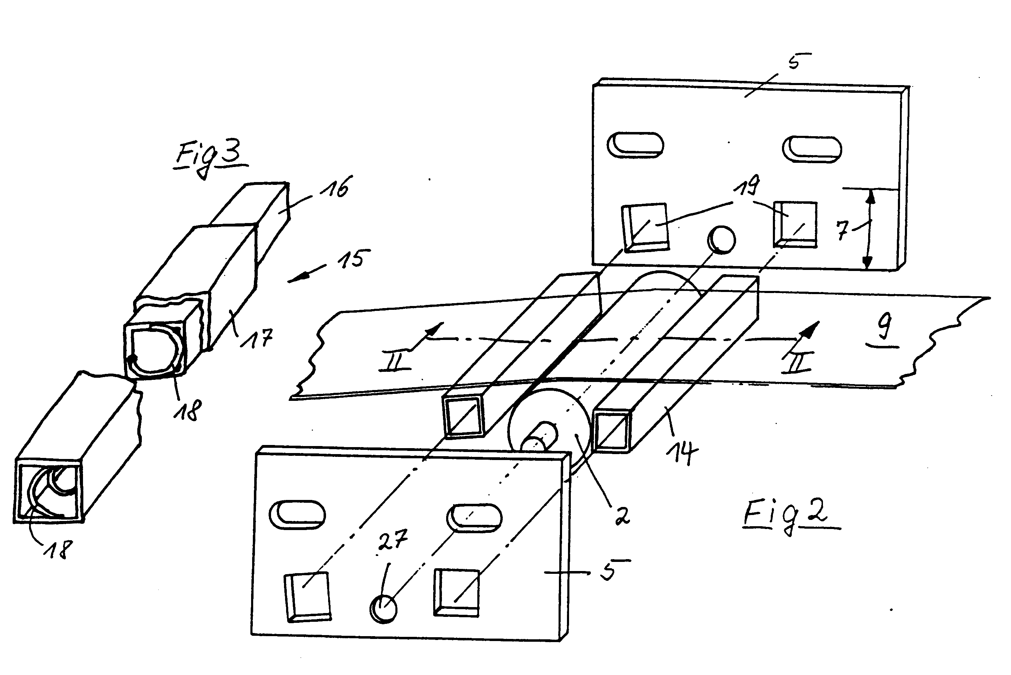

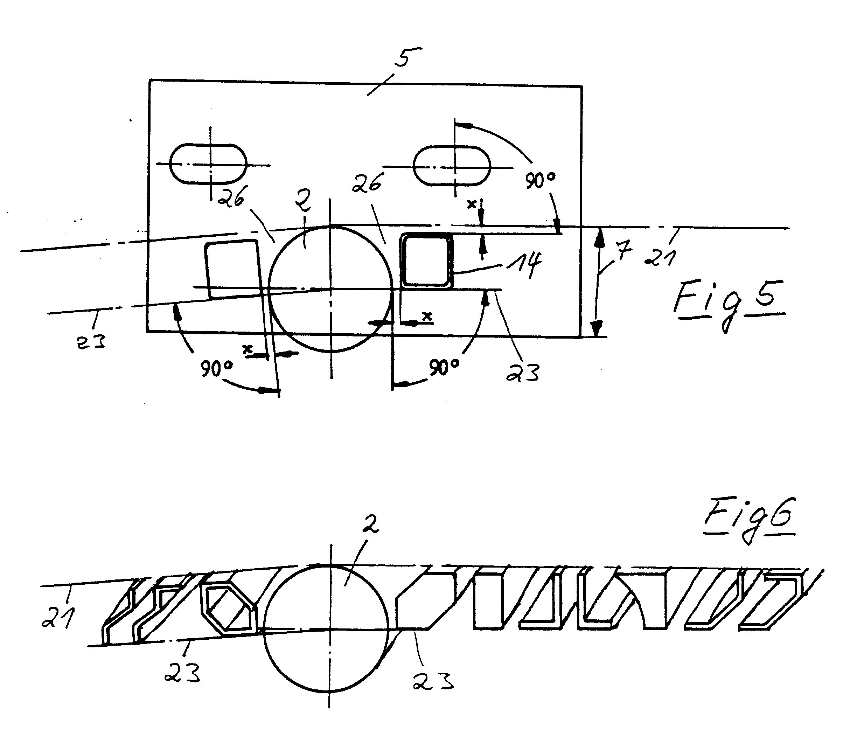

In Fig. 1 ist der dort mit "A" gekennzeichnete Bereich in seiner Ausbildung nach dem Stand der Technik gestaltet. Dort ist eine Walze 2 vorgesehen, die als Andrückwalze arbeitet, die von unten im dargestellten Ausführungsbeispiel gegen die äußere Fördermitteloberfläche 21 gedrückt wird und somit das Fördermittel spannt. Die Anordnung und Wirkungsweise ist am besten zu sehen in Fig. 10. Hierzu ist in bekannter Weise Walze 2 in einem Tragstück 5 drehbar gelagert, wobei das Tragstück 5 am Rahmen des Bandförderers lageveränderlich befestigt ist. Zur Abdeckung des dort entstehenden Einzugsspaltes sind im Stand der Technik Abdeckglieder 11 (Fig. 1) vorgesehen, die als dünne Stangen ausgebildet sind und sich über die gesamte Länge der Walze 2 erstrecken. Sie sind jeweils vor dem Einzugsspalt angeordnet und so nahe an die Oberfläche der Walze einerseits und des Fördermittels andererseits herangeführt, daß dort ein Einziehen von Fingern oder Kleidungsstücken nicht mehr möglich erscheint. Dennoch ist diese Form der Absicherung noch unbefriedigend, weil die gen. Stangen 11 ebenfalls nur einfach eingehängt sind in entsprechende Bohrungen der Tragstücke 5 und sich in diesen Bohrungen mitdrehen können. Dies aber bedeutet, daß zwar der Einzusspalt zwischen Walze 2 und Oberfläche des Fördermittels abgedeckt ist, aber gleichzeitig zwei neue Einzugsspalte an den gen. Stangen 11 geschaffen wurden. Die Fähigkeit der Stangen 11 sich mitzudrehen begünstigt die Einzugsmöglichkeit. Aber auch ein Festsetzen dieser Stangen 11, um deren Drehung zu vermeiden, stellt keine befriedigende Lösung dar. Nach Fig. 2 werden daher anstelle der Stangen 11 Abdeckglieder 14 eingesetzt, die nach der Ausführungsform der Fig. 2 ein quadratisches Kastenprofil aufweisen, das mit seinen Enden in enstprechende quadratische Öffnungen 19 im Tragelement 7 des Tragstückes 5 eingesteckt ist. Dieser Profilstab 14 kann sich nun in der ihn aufnehmenden Öffnung 19 nicht mehr drehen. In seiner Drehlage ist dieser Profilstab 14 so angeordnet, daß er mit einer Fläche wenigstens angenähert parallel zur Fördermitteloberfläche 21 verläuft. Zwischen dieser Fläche und der Fördermitteloberfläche 21 verbleibt noch ein möglichst kleiner Spalt "X", der mit seiner Größe innerhalb erlaubter Grenzen liegt. Eine zur ersten Fläche senkrechte und walzennahe Fläche des Kastenprofils erstreckt sich etwa bis in den Bereich einer Durchmesserlinie durch die Walze, die parallel zur gen. Fördermitteloberfläche 21 verläuft. Dort ist sie ebenfalls mit einem Abstand "X" an die Walzenoberfläche herangeführt, wobei der gen. Abstand wiederum innerhalb zulässiger Grenzen liegt. Die Anordnung und die Größenverhältnisse sind am besten in Fig. 5 zu erkennen. Es ist dort zu sehen, daß die Einzugsspalten 26 von dem als Profilstab ausgebildeten Abdeckglied sicher abgedeckt werden. Neue Einzugsspalten werden nicht gebildet, weil keine enger werdenden Keilflächen mehr vorhanden sind. Hierzu ist es wichtig zu beachten, daß das Abdeckglied 14 mit einer nicht der Fördermitteloberfläche 21 zugeordneten Seitenwand bis auf die Durchmesserlinie 23 geführt ist, weil bei kleineren Abmessungen sich mit der Oberfläche der Walze wieder ein Einzugskeil bilden würde.

In Fig. 6 sind verschieden Querschnittsprofile von solchen Abdeckgliedern 14 dargestellt. Alle dort dargestellten Profile können die der Erfindung zugrundeliegende Aufgabe lösen. Bei der Auswahl der Profile ist entscheidend, daß die Profile so gestaltet sind und solche Abmessungen aufweisen, daß sie nach ihrem Einbau weder mit der Fördermitteloberfläche 21 noch mit der Oberfläche der Walze 2 einen neuen Einzugskeil bilden. Von sekundärer Bedeutung ist es, ob die Profilstäbe aus Vollmaterial oder hohl gestaltet sind.

Die Größe der Öffnungen 19 muß so bemessen sein, daß die Profilstäbe 14 im bereits zusammengebauten Zustand des zugeordneten Bandförderers noch eingesetzt werden können. Hierzu reicht eine geringe Übergröße bei den Öffnungen 19 bezogen auf die Querschnittsabmessungen des Profilstabs 14. Bei geringer Übergröße können nämlich die Tragstücke 5 am zugeordneten Rahmen in Längsrichtung gegeneinander versetzt und dann die Profilstäbe 14 schräg eingehängt werden. Nach dem Ausrichten der Tragstücke 5 nehmen dann die Profilstäbe 14 ihre gewünschte Lage ein.

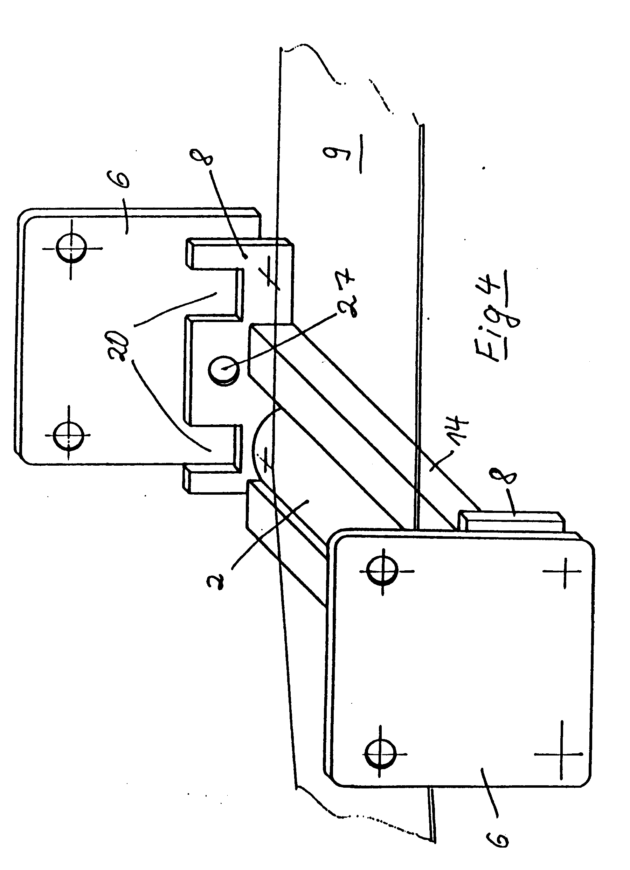

Es sind jedoch auch weitere Montageerleichterungen denkbar. Ein Beispiel hierfür zeigt Fig. 3. Auch Fig. 3 zeigt ein Abdeckglied 15 von quadratischem Querschnitt. Das Abdeckglied 15 ist jedoch aus einem inneren Stab 16 und einem äußeren Stab 17 zusammengesetzt. Der innere Stab 16 kann hohl oder voll sein. Die Abmessungen sind so gewählt, daß der innere Stab 16 im äußeren Stab 17 teleskopartig verschoben werden kann. Am inneren Ende des inneren Stabs 16 liegt eine Spiraldruckfeder 18 an, die sich mit ihrem zweiten Ende im eingebauten Zustand bspws. am Rahmen des Bandförderers abstützt. Es kann aber auch ein einfacher Querbolzen durch den äußeren Stab 17 hindurchgesteckt werden, so daß sich die Druckfeder 18 an einem solchen Querbolzen abstützen kann. Diese Ausführungsform ist, wegen ihrer Einfachheit, nicht gezeichnet. Diese Ausführungsform nach Fig. 3 kann durch Einschieben des inneren Stabs 16 gegen den Druck der Druckfeder 18 so verkürzt werden, daß dieses verkürzte Abdeckglied 15 in Einbauposition gebracht und dann entspannt werden kann. Die jeweiligen freien Enden des äußeren Stabes 17 und des inneren Stabes 16 greifen dann wieder in die zugeordneten Öffnungen 19, die in ihren Querschnittsabmessungen auf das Abdeckglied 15 abgestimmt sind, ein. Es muß jedoch betont werden, daß es nicht zwingend erforderlich ist, daß der innere Stab 16 unter einer elastischen Vorlast steht. Es ist auch denkbar, die beiden Einzelstücke 16 und 17 in Einbauposition manuell auseinanderzuziehen, so daß die freien Enden jeweils in die Öffnungen 19 der Tragstücke 5 eingreifen. In dieser Stellung wird durch beide Körper hindurch eine Querbohrung gebohrt und durch diese Querbohrung ein Bolzen hindurchgesteckt. Hierbei reicht es schon aus, wenn der Bolzen nur durch jeweils eine Wand des inneren Stabes 16 und des äußeren Stabes 17 geführt ist.
Es ist ebenso gut denkbar, den inneren Stab 16 als Hohlstab auszubilden und an geeigneter Stelle eine Wand U-förmig einzuschlitzen, so daß dort eine Federzunge frei wird. Diese Federzunge braucht dann in montierter Stellung des Abdeckglieds 15 nur nach außen gezogen zu werden, so daß sie sich gegen die zugeordnete Stirnwand des äußeren Stabes 17 mit ihrer Stirnseite anlegt, wodurch ein erneutes ungewolltes Einfahren des inneren Stabs 16 verhindert wird. Auch diese Ausführung ist so einfach, daß es einer zeichnerischen Darstellung nicht bedarf.

Eine weitere Montageerleichterung zeigt das Ausführungsbeispiel nach Fig. 4. Während nach dem Ausführungsbeispiel in Fig. 2 Tragstück 5 und Tragelement 7 durchgehend einstückig ausgebildet sind, sind nach dem Ausführungsbeispiel in Fig. 4 Tragstück 6 und zugeordnetes Tragelement 8 unabhängige Bauteile. Die Tragstücke 6 werden wieder am Rahmen des Bandförderers befestigt und tragen ihrerseits jeweils ein Tragelement 8 mit einer Bohrung 27 zur Aufnahme der Drehachse der Walze 2 sowie mit zwei in entsprechendem Abstand angeordneten nach oben offenen Schlitzen 20. Die offenen Schlitze 20 weisen bei Verwendung eines quadratischen oder rechteckigen Profilstabs 14 eine diesem Profilstab 14 angepaßte Form auf, so daß die jeweiligen Profilstäbe 14 einfach von oben in die Schlitze 20 der Tragelemente 8 eingehängt werden können. Es wird dann wieder eine Einbauposition erreicht, wie sie in Fig. 5 zu erkennen ist. Hierbei können die Tragelemente 8 in beliebiger Weise mit den Tragstücken 6 verbunden sein. Dies kann bspws. durch Vernietung, Verschraubung oder Verschweißung geschehen.
Die Ausführungsform nach Fig. 4 bietet sich insbesondere für rechteckige oder quadratische Querschnittsprofile der Abdeckglieder 14 an. Sind die Schlitze 20 entsprechend schmal, so kann ein extremes Rechteckprofil, nämlich ein Flacheisen oder ein Blech, eingesetzt werden. Ein solches Blech würde dann in seiner Anordnung der Lage der walzennahen Wand des quadratischen Kastenprofils in Fig. 5 entsprechen.

Die Figuren 10 und 11 zeigen in schematisierter Seitenansicht bzw. Draufsicht einen Gurtförderer in erfindungsgemäßer Weise ausgerüstet. Die Einzugsspalte an der Walze 1 sind abgedeckt mit dem Abdeckglied 13 nach Fig. 8 und 9. Der dargestellte Gurtförderer weist zwei Andrückwalzen 2 auf, die jeweils wieder von einem Tragstück 5 an beiden Enden der Walze 2 getragen werden. Das Fördermittel 9, nämlich der Gurt, wird von den Andrückwalzen nach oben gedrückt und damit strammgezogen. Die Einzugsspalte 26 sind von den Abdeckgliedern 14, die im Ausführungsbeispiel nach Fig. 10 quadratischen Querschnitt aufweisen, abgedeckt. Neue Einzugsspalten sind verhindert.

Die Fig. 11 zeigt die Einstellmöglichkeiten der Walzen 2, um den Gurtverlauf zu beeinflussen. Die Abdeckglieder 14 können sich mitverschieben, da sie lose eingehängt sind. Sie bleiben zueinander parallel, wobei der verbleibende und zulässige Spalt zwischen der Oberfläche des Abdeckgliedes 14 und der Oberfläche der zugeordneten Andrückwalze noch genügend groß ist, die dargestellte Einstellmöglichkeit zu erlauben.

### Liste der verwendeten Bezugszeichen

- 1: Walze
- 2: Walze
- 3: Förderbandrahmen
- 4: Tragstück
- 4′: Tragstück
- 5: Tragstück
- 6: Tragstück
- 7: Tragelement
- 8: Tragelement
- 9: Fördermittel
- 10: Abdeckglied
- 11: Abdeckglied
- 12: Abdeckglied
- 13: Abdeckglied
- 14: Abdeckglied
- 15: Abdeckglied
- 16: innerer Stab
- 17: äußerer Stab
- 18: Druckfeder
- 19: Öffnungen
- 20: Schlitz
- 21: Fördermitteloberfläche
- 22: Fördermitteloberfläche
- 23: Durchmesserlinie
- 24: Vertiefungen
- 25: Spannhülsen
- 26: Einzugsspalte
- 27: Bohrung

## Patentansprüche

1. Vorrichtung zur Sicherung von fördermittelein- und/oder -auslaufseitiger Einzugsspalten zwischen einer Fördermitteloberfläche (21,22) eines Fördermittels (9) eines Bandförderers und einer Walzenoberfläche mindestens einer zugeordneten Walze (1,2) wobei jede Walze in an einem Förderbandrahmen (3) befestigten Tragstücken (4, 4',5,6) bzw. Tragelement (7,8) drehbar gelagert ist und wobei mindestens den Tragstücken (4) der Aufgabe- und der Abgabewalze (1) ein Abdeckglied (12, 13) zugeordnet ist, das die zugeordnete Walze (1) auf deren nicht das Fördermittel führenden Seite zwischen einlaufendem und ablaufendem Trum desselben mit lediglich einen Bewegungs- oder Einstellspielraum bildenden Abstand mindestens teilweise umgibt, dadurch gekennzeichnet, daß das Abdeckglied (12, 13, 14, 15) als Profilstab (14, 15) mit nicht kreisrundem Querschnitt gestaltet ist, der mit seinen Endenlose in entsprechend geformte Stecker (25) oder Öffnungen (19) oder Schlitze (20) der Tragstücke (4,4',5,6) bzw. der Tragelemente (7,8) eingehängt oder eingesteckt ist.

2. Vorrichtung nach Anspruch 1, dadurch gekennzeichnet, daß die Abdeckglieder (12, 13, 14) einstückig ausgebildet sind.

3. Vorrichtung nach Anspruch 2, dadurch gekennzeichnet, daß jeder Profilstab (14, 15) im eingebauten Zustand mit einer Fläche oder einem Flächenbereich einerseits bis auf einen zulässigen Spalt (X) an die zugeordnete Fördermitteloberfläche (21) und andererseits bis au die Walzenoberfläche der zugeordneten Walze (2) heranreicht.

4. Vorrichtung nach Anspruch 3, dadurch gekennzeichnet, daß die Unterseite des an die Walzenoberfläche heranreichenden Teils des Profilstabes (14,15) wenigstens angenähert in Höhe einer parallel zur Fördermitteloberfläche (219 verlaufenden Durchmesserlinie (23) der Walze endet.

5. Vorrichtung nach einem der Ansprüche 2 bis 4, dadurch gekennzeichnet, daß der Profilstab (14,15) als Vollprofil, Hohlprofil, Winkelprofil oder Flachprofil ausgebildet ist.

6. Vorrichtung nach einem der Ansprüche 2 bis 5, dadurch gekennzeichnet, daß der Profilstab (14,15,) als Vollprofil oder Hohlprofil mit rechtwinkligem Querschnitt ausgebildet ist.

7. Vorrichtung nach einem der Ansprüche 2 bis 6, dadurch gekennzeichnet, daß die Öffnungen (19) oder Schlitze (20) durchgehend und mit etwas Spiel zu den Außenabmessungen des Profilstabes (14,15) geformt sind.

8. Vorrichtung nach einem der Ansprüche 2 bis 7, dadurch gekennzeichnet, daß die Tragelemente (7) einstückig mit den Tragstücken (5) ausgebildet sind.

9. Vorrichtung nach einem der Ansprüche 2 bis 8, dadurch gekennzeichnet, daß die Tragelemente (8) als von den Tragstücken (6) unabhängige Bauteile ausgeführt und an den Tragstücken (6) befestigt sind.

10. Vorrichtung nach einem der Ansprüche 2 bis 9, dadurch gekennzeichnet, daß mindestens ein Profilstab (15) aus zwei Einzelstäben (16,17) besteht, von denen mindestens ein Einzelstab (17) ein Kastenprofil aufweist, während der andere (16) im inneren Hohlraum des Kastenprofils verschiebbar angeordnet ist.

11. Vorrichtung nach Anspruch 10, dadurch gekennzeichnet, daß der andere Einzelstab (16) gegen die Vorlast einer im inneren des ersten Einzelstabs (17) angeordneten Druckfeder (18) einschiebbar ist.

## Claims

1. Device for securing the entry gaps of conveying means on the feed-in side and/or on the exit side between a conveying means surface (21, 22) of a conveying means (9) of a band conveyor and a roller surface at least of one associated roller (1, 2), wherein each roller is rotatably mounted in support pieces (4, 4', 5, 6) attached to a band conveyor frame (3) and/or support elements (7, 8) and wherein at least one cover element (12, 13) is associated with the support pieces (4) of the feed-in and exit roller (1) and the said cover element (12, 13) at least partially envelops the associated roller (1) on its side not guiding the conveying means between the incoming run and the exiting run thereof with only a spacing which forms clearance for movement and adjustment, characterised in that the cover element (12, 13, 14, 15) is formed as a profiled rod (14, 15) which has a non-circular cross section and which is suspended or inserted with its ends loosely in correspondingly formed sockets (25) or openings (19) or slits (20) of the support pieces (4, 4', 5, 6) and/or the support elements (7, 8).

2. Device according to claim 1, characterised in that the cover elements (12, 13, 14) are formed as one piece.

3. Device according to claim 2, characterised in that each profiled rod (14, 15) in the installed condition reaches with a surface or a surface region on the one side except for a permissible gap (X) as far as the associated conveying means surface (21) and on the other side as far as the roller surface of the associated roller (2).

4. Device according to claim 3, characterised in that the lower side of the part of the profiled rod (14, 15) which extends to the roller surface ends at least approximately at the level of a diameter line (23) extending in parallel with the conveying means surface (21).

5. Device according to one of claims 2 to 4,
characterised in that the profiled rod (14, 15) is formed as a solid profile section, a hollow profiled section, an angled profiled section or a flat profiled section.

6. Device according to one of claims 2 to 5,
characterised in that the profiled rod (14, 15) is formed as a solid profile section or a hollow profile section with a rectangular cross section.

7. Device according to one of claims 2 to 6,
characterised in that the openings (19) or slits (20) are throughgoing and are formed with a certain amount of clearance to the external dimensions of the profiled rod (14, 15).

8. Device according to one of claims 2 to 7,
characterised in that the support elements (7) are formed as one piece with the support pieces (5).

9. Device according to one of claims 2 to 8,
characterised in that the support elements (8) are formed as components independently from the support pieces (6) and are attached to the support pieces (6).

10. Device according to one of claims 2 to 9,
characterised in that at least one profiled rod (15) comprises two individual rods (16, 17), of which at least one individual rod (17) comprises a box-type profiled section, whereas the other (16) is displaceably disposed in the inner hollow space of the box-type profile section.

11. Device according to claim 10, characterised in that the other individual rod (16) can be pushed in against the initial loading of a compression spring (18) disposed in the interior of the first individual rod (17).

## Revendications

1. Dispositif pour la protection d'interstices d'accès situés côté entrée et/ou côte sortie de moyens de transport, entre une surface de moyen de transport (21, 22) d'un moyen de transport (9) d'un transporteur à bande et une surface de cylindre d'au moins un cylindre associé (1, 2), étant précisé que chaque cylindre est monté à rotation dans des pièces de support (4, 4', 5, 6), respectivement des éléments de support (7, 8), fixés à un châssis (3) de bande de transporteur, et qu'un élément de recouvrement (12, 13) est associé au moins aux pièces de support (4) du cylindre d'alimentation et du cylindre d'évacuation (1), cet élément entourant au moins partiellement le cylindre associé (1), du côté de ce dernier qui ne guide pas le moyen de transport, entre le brin d'entrée et le brin de sortie, en laissant uniquement un espace constituant une marge de déplacement ou de réglage, caractérisé en ce que l'élément de recouvrement (12, 13, 14, 15) est conçu sous la forme d'une barre profilée (14, 15) de section non circulaire, qui est accrochée ou emboîtée de façon lâche par ses extrémités dans des éléments de fixation (25) ou des ouvertures (19) ou des fentes (20) de forme correspondante des pièces de support (4, 4', 5, 6) ou des éléments de support (7, 8).

2. Dispositif selon la revendication 1, caractérisé en ce que les éléments de recouvrement (12, 13, 14) sont constitués d'une seule pièce.

3. Dispositif selon la revendication 2, caractérisé en ce que chaque barre profilée, à l'état monté, s'approche par une surface ou une partie de surface, d'une part de la surface associée (21) du moyen de transport jusqu'à un espace admissible (X), et d'autre part jusqu'à la surface du cylindre associé (2).

4. Dispositif selon la revendication 3, caractérisé en ce que la face inférieure de la partie de la barre profilée (14, 15) s'approchant de la surface du cylindre se termine au moins approximativement au niveau d'une ligne diamétrale (23) du cylindre qui s'étend parallèlement à la surface (21) du moyen de transport.

5. Dispositif selon l'une quelconque des revendications 2 à 4, caractérisé en ce que la barre profilée (14, 15) est réalisée sous la forme d'un profilé plein, d'un profilé creux, d'une cornière ou d'un profilé plat.

6. Dispositif selon l'une quelconque des revendications 2 à 5, caractérisé en ce que la barre profilée (14, 15) est réalisée sous la forme d'un profilé plein ou d'un profilé creux de section rectangulaire.

7. Dispositif selon l'une quelconque des revendications 2 à 6, caractérisé en ce que les ouvertures (19) ou les fentes (20) sont traversantes et formées avec un certain jeu par rapport aux dimensions extérieures de la barre profilée (14, 15).

8. Dispositif selon l'une quelconque des revendications 2 à 7, caractérisé en ce que les éléments de support (7) sont réalisés d'une seule pièce avec les pièces de support (5).

9. Dispositif selon l'une quelconque des revendications 2 à 8, caractérisé en ce que les éléments de support (8) sont réalisés sous la forme d'éléments de construction indépendants des pièces de support (6) et fixés à ces dernières.

10. Dispositif selon l'une quelconque des revendications 2 à 9, caractérisé en ce qu'au moins une barre profilée (15) est constituée de deux barres individuelles (16, 17) dont au moins une barre individuelle (17) comporte un profil en caisson, tandis que l'autre (16) est disposée de façon coulissante dans l'espace creux intérieur du profil en caisson.

11. Dispositif selon la revendication 10, caractérisé en ce que l'autre barre individuelle (16) est insérable à l'encontre de la précontrainte d'un ressort de pression (18) disposé à l'intérieur de la première barre individuelle (17).
